# EUROPEAN PATENT APPLICATION

(11) **EP 4 607 366 A1**
(43) Date of publication of application: **27.08.2025**
(21) Application number: 25158666.5
(22) Date of filing: 18.02.2025
(51) Int. Cl.: G06F 16/2455

(54) **METHOD AND SYSTEM FOR DATA PIPELINE STRATIFICATION FOR LOW LATENCY ACCESS**

(30) Priority: 22.02.2024 US 202463556526 P; 13.12.2024 US 202418980294
(71) Applicant: BlackBerry Limited, Waterloo, Ontario N2K 0A7 (CA)
(72) Inventor: SPERANZA, Roberto, Waterloo, Ontario N2K 0A7 (CA)
(74) Representative: MERH-IP Matias Erny Reichl Hoffmann Patentanwälte PartG mbB

(57) **Abstract**

A method at a data pipeline in computing system, the method including receiving data and a schema identifier associated with the data; confirming that the schema identifier is valid; and routing the data at the data pipeline based on the schema identifier. Also, a computing system having a processor; a data pipeline; and a communications subsystem, wherein the computing system is configured to: receive data and a schema identifier associated with the data; confirm, using the processor, that the schema identifier is valid; and route the data at the data pipeline based on the schema identifier.

## Description

### FIELD OF THE DISCLOSURE

The present disclosure relates to distributed systems, and in particular data pipelines in distributed systems.

### BACKGROUND

In a data processing ecosystem, data may be input to the system and may need to be dealt with in different ways. However, certain data may require processing which may cause latency in the system.

In one example, the data processing ecosystem may relate to vehicles. Modern vehicles have differing processors, control units, sensors and other computing nodes. Such sensors may be distributed within the various computing nodes on the vehicle, where each computing node may have access to zero, one or more sensor drivers. Sensors, or groups of sensors, may be used to generate information that could be useful to one or more applications. Such information is referred to herein as an insight.

Software may be developed to leverage such insights. However, access to such data may require fast transfer of data from cloud VMs or external data networks containing vehicle data to internal storage, such that the data could be retrieved within a short period of time.

### BRIEF DESCRIPTION OF THE DRAWINGS

The present disclosure will be better understood with reference to the drawings, in which:
**Figure 1** is a block diagram showing an example computing node within a computer system.
**Figure** 2 is a block diagram showing a system for used with the embodiments of the present disclosure.
**Figure** 3 is a block diagram showing an example system for having a low latency data processing pipeline.
**Figure** 4 is a block diagram showing another example system for having a low latency data processing pipeline.
**Figure** 5 is a block diagram showing an example data processing pipeline.
**Figure** 6 is a process diagram showing a process to create and use processing functions within a data processing pipeline.
**Figure** 7 is a block diagram of a simplified computing device capable of being used with the embodiments of the present disclosure.

### DETAILED DESCRIPTION OF THE DRAWINGS

The present disclosure provides a method at a data pipeline in computing system, the method comprising: receiving data and a schema identifier associated with the data; confirming that the schema identifier is valid; and routing the data at the data pipeline based on the schema identifier.

The present disclosure further provides a computing system comprising: a processor; a data pipeline; and a communications subsystem, wherein the computing system is configured to: receive data and a schema identifier associated with the data; confirm, using the processor, that the schema identifier is valid; and route the data at the data pipeline based on the schema identifier.

The present disclosure further provides a computer readable medium for storing instruction code, which, when executed by a processor in a computing system cause the computing system to: receive data and a schema identifier associated with the data; confirm, using the processor, that the schema identifier is valid; and route the data at the data pipeline based on the schema identifier.

In many data driven systems, a nimble data pipeline that facilitates efficient and fast transfer of data from cloud virtual machines (VMs) or external data networks may be needed. Such data may, for example, in some cases be transferred to internal storage on a computing device, such that the data could be retrieved within a short period of time by parties to the system wanting to access this data externally. For such pipeline, an emphasis may be on low latency, in which case data transfer efficiency may be required.

In this regard, according to the embodiments of the present disclosure, a generic data pipeline was designed to be efficient on storing data in its original form with little processing other than validation against the schema. Further processing was designed with parallelization to achieve the same or similar latency between input of origin data and subsequent access of generated data.

In accordance with embodiments of the present disclosure, a base layer of data may be comprised of a generic data pipeline that would receive data initially. The data could be in a predefined format, with the condition that a schema for that format may be registered beforehand. For example, the data could be in a JavaScript Object Notation (JSON) format initially, with a chosen schema of JSONSchema. However, other data formats and schemas are possible, and the present disclosure is not limited to particular data formats and schemas.

In some cases, a simple Application Program interface (API) may be used to send data to a distributed system. For example, the API may be a Data Input REpresentational State Transfer (REST) API. However, other forms of APIs are possible.

Data may be then stored it in a database. For example, the database in some embodiments may be a Not Only Structured Query Language (NoSQL) database. However, other databases could equally be used.

Data could then be accessed in the distributed system in the same format using the defined API (e.g via a Data Access REST API in some cases).

Schema registration may be available on the input side and querying schemas would be available on both input and access APIs.

Aside from the Data Input API, data can be streamed into the distributed system via a data ingesting conduit, such as Kinesis^{™} in Amazon^{™} Web Services (AWS), Azure^{™} Event Hubs, among others, and via Internet of Things (loT) Core channels, among other options.

The conduits or channels route all the data into the generic data pipeline. While, this single channel could potentially bottleneck a larger data stream, this can be mitigated by creating duplicate lanes for the generic data pipeline, similar to highway express lanes which started as one lane and eventually expanded to multiple lanes. This represents baseline parallelization to handle throughput while preserving low latency.

Additional parallelization may further be used for achieving low latency on post-processed data. While it is not possible to achieve the same level of latency as unprocessed data, such parallelization enhances system performance. In this regard, a first step is to fork the incoming data along different paths mid-way through the pipeline to ensure copies of the data are diverted to separate lanes to handle the slower processing for archival and storage and the primary data is diverted to a data bus.

For example, the slower pathways may include database storage, where replication and connection setup can potentially introduce latency intermittently.

The slower pathways may further include archival storage. For example, simple storage service (S3)^{™} or Azure Blobs, among other storage services, are high latency operations. The use of S3 is used for illustration below, but the present disclosure is not limited to any particular storage.

The slower pathways may further include external streaming. For example, streaming to external channels may include a HyperText Transfer Protocol (HTTP) stream, data ingestion conduit streaming or redirection to third party storage, among others, all of which could pose intermittent high latency.

Sending the primary data to a data bus provides some benefits. In a first aspect, the bus itself may be a data cache that can be queried via a query language such as GraphQL, among other options, or other services in real time, potentially acting as a near term source for low latency queries. In one case, tenants interested in quick queries could potentially only hit the data bus for data if they specify near term timestamp ranges for queries.

In a second aspect, data processing components can be implemented to subscribe to data of different topics (one topic per schema) and they can be triggered to process incoming data as it arrives in the topic of interest. This event driven logic may result in massive parallelization. Components can be implemented for different types of processing. Such processing could include insight generation, as described below, analytics processing, and data decomposition for converting data into a different organization to support state tracking in a timely manner.

In a third aspect, any generated/processed data can be fed back into the bus for further downstream processing by components and simultaneous forked into slower data lanes for upstream archival, storage and external streaming, similar to how the data was forked from the generic data pipeline earlier in the flow.

The above could be implemented in any distributed data processing system. It is described below with regard to a vehicle system in which data may be processed to create insights for the system. However, this is merely provided as an example system and the present disclosure is not limited to any particular distributed data processing system.

### Vehicle System

In a modern vehicle, information from one or more physical sensors may be processed to create an "Insight" that may be valuable in a system. Such one or more physical sensors and the processing associated therewith may be referred to logically as a micro-service or a Synthetic Sensor (SS). The terms micro-service and Synthetic Sensor are used interchangeably herein.

Synthetic Sensors may exist in other types of applications, including but not limited to medical applications, manufacturing applications, Internet of Things applications, among others, and the present disclosure is not limited to vehicle applications. Vehicle applications are provided for illustration below.

Insight is the term used herein to describe any computer created interpretation of basic sensor data. Insights can be as straightforward as data aggregation or correlation or as complex as artificial intelligence and machine learning. For example, a temperature sensor providing high and low watermarks for notification may be considered an "insight". For signal services, geofencing is an insight. For cameras, occupant recognition may be an insight. The use of a combination of sensors such as temperature sensors and cameras, may be used with an artificial intelligence model to determine whether a car seat is occupied in a hot vehicle, which may be an insight. Many other examples of insights are possible.

In one embodiment, the vehicle applications may be implemented in a system providing consistent access to vehicle data and intelligent insights in a way that is familiar and accessible to developer communities. Such environment may allow cloud developers to extend their reach to the edge within the vehicle through the development of Synthetic Sensors which derive intelligent insights on vehicle data using common cloud development technologies and paradigms. Such environment may provide consistent access to vehicle data such that Synthetic Sensors can be written and deployed to a broad vehicle base without bespoke customization.

Specifically, using abstraction allows for similar data to be provided to a synthetic sensor, while the hardware and software on each vehicle may differ from that of other vehicles. Some vehicles may be configured with certain sensors, hardware, Electronic Control Units (ECUs), or operating systems (OSs) that may not be present in other vehicles.

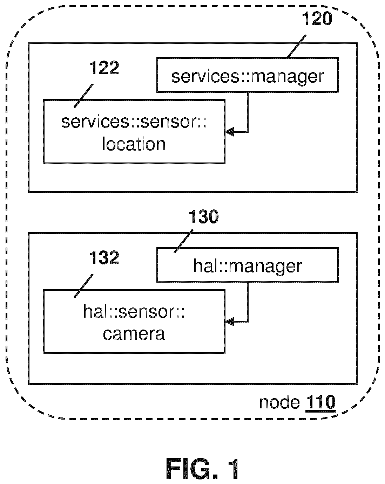

For example, reference is now made to **Figure 1** which shows a node **110** at the vehicle. A node, as used herein, may be one or a group of electronic control units, central processing units, or kernel controls, among other options, and can be considered as a single computing unit.

In the example of **Figure 1****,** node **110** includes a services manager **120** which may interact with drivers for sensors that the node is connected to. For example, the node **110** may have access to a location sensor such as a Global Positioning System (GPS) chipset, as shown at block **122.**

In order to allow node **110** to interact with modules on other nodes, and to provide functionality with a computing system, a Hardware Abstraction Layer (HAL) may be provided on node **110,** which comprises a HAL service **130.** Each HAL service **130** is responsible for the integration of a sensor and may provide various functions, including: integration to the underlying sensor; normalization of the sensor data; and/or, if required, providing a barrier between the safety certified and non-certified software. Other functions for the HAL service are also possible.

In the example of **Figure 1****,** the HAL is provided for camera information, as shown with block **132.**

While the example of **Figure 1** shows a node **110** with a single service and a single HAL, this is merely provided for illustration purposes. A node **110** could have a single service without a HAL, a single HAL without a service, a plurality of services with no HAL, a plurality of HALs with no service, and/or a combination of services and HALs.

One example of a system that could use node **110** would be an application development environment for vehicles. Such application development environment may develop applications for user experience including comfort, navigation, infotainment, among others, applications for safety, applications for fleet management; applications for performance monitoring; or other such applications for a vehicle environment. In particular, vehicles provide a plurality of sensors and different makes, models or brands may use different sensors with different data formats or values, creating fragmented sensor readings depending on such sensor. This fragmentation impedes the fostering of an application ecosystem that makes use of vehicle data. In addition, low level sensor data is often too granular to be readily useful to applications.

In this regard, the Hardware Abstraction Layer can be used to provide hardware independent sensor interfaces/abstractions which may encapsulate interaction with underlying sensor drivers. The use of the hardware abstraction in the various computing nodes creates a platform that is extensible, can provide barriers between modules to, for example, enforce safety certified systems being separate from other systems, among other options.

Applications do not interact directly with sensor hardware to access sensor data, instead they leverage the Hardware Abstraction Layer. This separation provides a clear distinction between the responsibilities of the HAL (sensor integration and normalizing sensor data) and other abstractions such as a Vehicle Abstraction Layer (VAL), used for managing access to vehicle data and providing value-added insights.

Specifically, insights may leverage sensor data from multiple HALs, via VALS, in order to provide vehicle abstraction and value-added insights. The VAL may control access to a normalized form of vehicle data while synthetic sensors may provide value-added inferences derived from data obtained from VALs. Examples may include a Signal Service, which may provide coordinate location data in a consistent format, from which synthetic sensors can compute insights such as geo-fencing., The VAL may also provide access to battery signals, which can be used by a synthetic sensor to compute charge state/consumption/projected hours remaining/projected range, or provide access to vehicle doors and door status; among others; a Camera Service which may provide the video frames for in-cabin camera to a synthetic sensor that can analyze the frame to recognize the driver or occupants and generate insights.

Insight Services may leverage sensor data from multiple HALs in order to provide vehicle abstraction and value-add insights. Higher level insights on data enable application developers to create future automotive experiences. Insight is the term used to describe any value-added interpretation of basic sensor data. Insights can be as straightforward as data aggregation or correlation or as complex as artificial intelligence and machine learning. For example, for a temperature sensor, providing high and low watermarks for notification may be considered an "insight". For location services - geofencing is an insight, for cameras - occupant recognition may be considered an insight.

Nodes with services and HAL managers as described in **Figure** 1 may therefore be needed for such application development environment. Node 110 may, in many systems, need to communicate with other nodes on the vehicle, such as other ECUs, CPUs, or computing systems, where such ECUs, CPUs, or computing systems may use a different operating system from that of node 110.

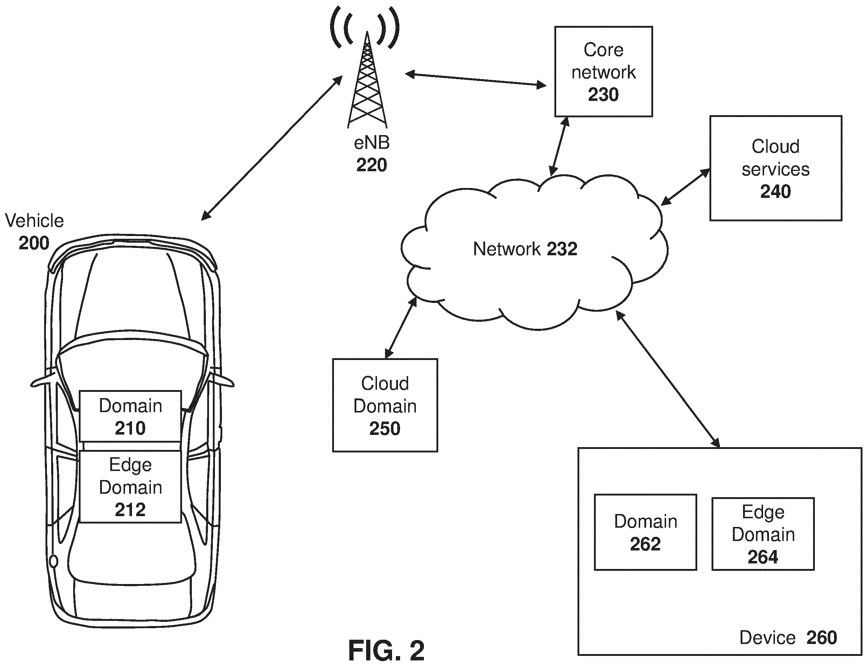

Reference is now made to **Figure 2****,** which shows an example deployed system showing various generators and consumers of insights. The embodiment of **Figure 2** is merely provided for illustration purposes, and in some cases fewer participants in a system will exist. In other cases, more participants in a system will exist.

In the embodiment of **Figure 2****,** a vehicle **200** may be equipped with a computing system and a communications system. Part of the computing system may include a domain **210,** which, as described below, may have applications that consume insights. Further, part of the computing system on vehicle **210** may include an edge domain **212.** In some embodiments, edge domain **212** may generate insights. However, in other cases, insights may be generated within domain **210** or consumed within edge domain **212.**

In the example of **Figure 2****,** vehicle **200** communicates utilizing a communications system with an access point, such as a cellular base station, shown in **Figure 2** as eNB **220.** The base station may communicate with a core network **230** which may then forward communications through a network **232** to a cloud services provider **240.** Network **232** may, for example, be a wide area network such as the Internet.

In other embodiments, rather than a core network **230,** any technology associated with a particular cellular or wireless communications protocol may be used with the vehicle example of **Figure 2****.** In other cases, any wired or wireless communication protocol could be used to connect to cloud services **240** or cloud domain **250.**

In some embodiments, cloud services **240** may provide developer Software Development Kits (SDKs), edge node interfaces, among other services.

In some embodiments, a cloud domain **250** may generate or consume insights. Cloud domain **250** may communicate through network **232** with a cloud services provider **240** and may communicate with other domains such as edge domain **212** on vehicle **200** in some cases.

Further, rather than a vehicle, a device **260** may consume insights. Device **260** may be any computing device capable of generating or consuming such insights, and could include Internet of Things devices, mobile devices, medical equipment, vehicles or equipment associated with vehicles, among other options. Device **260** may communicate through network **232** utilizing various wired or wireless technologies, including but not limited to Ethernet, fiber, cellular, Wi-Fi, satellite, among other options.

Device **260** may include a domain **262** which may, in some embodiments, consume insights. Further, device **260** may include an edge domain **264** which may, in some cases, generate insights. However, in other cases, domain **262** may generate insights and edge domain **264** may consume insights.

Further, while the embodiment of **Figure 2** shows only two domains within vehicle **200** or device **260,** in practice only one or many domains may exist within the vehicle **200** or the device **260,** and the present disclosure is not limited to only having two domains within any particular device. In particular, a device **260** may be solely used for generating insights, in which case it will have only a single domain. In other cases, device **260** may solely consume insights and again have only one domain. In other cases, a device **260** or vehicle **200** may have a plurality of domains along with edge domain **212.**

In some embodiments, device **260** could be a developer device for the creation of insights for the system.

Each domain or edge domain may have an architecture that is OS-agnostic. Specifically, the domains shown in **Figure 2** may be implemented on a variety of domains, where different domains may have different operating systems. For example, in vehicle systems, different vehicle manufacturers may use different operating systems. Therefore, a system architecture for an edge domain may use abstraction layers to allow the system to be implemented on different platforms.

While the example of **Figure 2** shows an example system for use with embodiments of the present disclosure, it is merely provided for illustration, and other systems could equally be used with the embodiments herein. The example of **Figure 2** is therefore not limiting.

### Data Pipeline

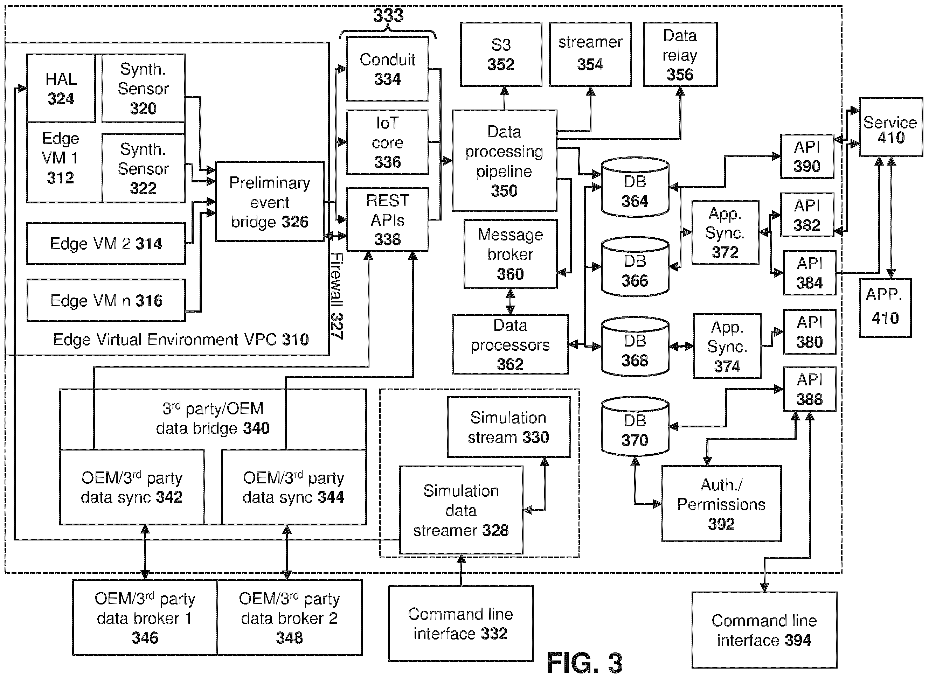

A sample architecture for the embodiments of the present disclosure is provided herein with the example of **Figure 3****.**

In the example of **Figure 3****,** the system comprises at least one edge virtual environment Virtual Private Cloud (VPC) **310.** This may be the vehicle **200** from the example of **Figure 2** in some embodiments. Components outside **310** can be in a cloud outside the vehicle, and could be part of, for example, cloud services **240** or part of cloud domain **250** from the example of **Figure 2****.**

In the example of **Figure 3****,** the edge virtual environment VPC **310** includes one or more virtual machines (VMs), shown in the example of **Figure 3** as VM **312,** VM **314** and VM **316.** As will be appreciated by those in the art, the number of VMs will depend on the implementation and could be one, two or more, and the present disclosure is not limited to any particular number of VMs. Further, in some embodiments, non-virtualized operating systems could be used instead of, or in addition to, VPC **310.** Therefore, the virtual environment of the example of Figure 3 is merely provided for illustration.

Each VM could have zero, one or more synthetic sensors, and in the example of **Figure 3****,** VM **312** includes synthetic sensor **320** and synthetic sensor **322.** As indicated above, synthetic sensors **320** and **322** may consume data and provide insights.

VM **312** is further shown with a hardware abstraction layer **324.** Such hardware abstractions layer **324** may receive information from physical sensors on a vehicle, for example. Such information may be received over a data bus such as a CANbus, among other options.

In a testing environment, data may also come from a simulation data streamer **328,** which may receive inputs from a simulation stream **330** or a command line interface **332.** In particular, a VM runtime environment may need the ability for a user to stream or play data into the HAL / VAL layers of the edge virtual environment VPC **310** in order to generate input data for synthetic sensors running in the environment. To do this, a set of local scripts with useful data extracted from available test datasets may be used. The command line interface **332** may be used to request and control a stream of simulated data from data sets. Further, in some cases, the cloud data environment **310** may accept uploaded data, and allow 3rd party developers to stream uploaded data, select data from a data store or simulated data controlled by a timeline script that specifies the types of events to simulate.

Data from the various synthetic sensors may be provided to a preliminary event bridge **326.** The preliminary event bridge **326** may be used to relay data coming from synthetic sensors on an edge device.

Therefore, data from the synthetic sensors is provided through the preliminary event bridge **326** to a data injection layer **333.** In some cases, this communication may be through a firewall **327,** which may act as a security layer between VPC **310** and data injection layer **333.** For example, firewall **327** may provide access control, traffic filtering, logging, among other similar functionality.

The data injection layer **333,** in the example of **Figure 3** comprises one or more of a data ingestion conduit **334,** an loT core **336,** and REST APIs **338.** However, more or fewer data conduits or connections are possible.

In addition to data from one or more edge virtual environment VPCs **310,** data may be provided from one or more data bridges. A 3^{rd} party/Original Equipment Manufacturer (OEM) data bridge **340** is shown in the example of **Figure 3****.**

In particular, data bridge **340** may be used to leverage data sources such as 3rd party automotive data brokers to source real world automotive data. This may be done both during testing and prior to deployment of real-world edge devices, and also after such deployment for additional data to be provided to the system. Data bridge **340** may be used to pull that data out of the OEMs and stream it into system. Thus, data bridge **340** may be compromised of one or more data adapters, which are micro-services that are responsible for independently fetching data from a single 3rd party or OEM data source and bulk uploading the data into system, and also gradually polling or receiving streams of the data from the 3rd party service and relaying the incremental batches of data and uploading them to system. Such microservices are shown as OEM/3rd party data sync **342** and OEM/3rd party data sync **344.**

Data sync **342** interacts with a data broker **346** and data sync **344** interacts with a data broker **348.**

These two modes for the data syncs may be used for various reasons. First, when a new data broker is added, one function may be to first upload as much historical data as possible. Second, during an initial prototyping / deployment phase, several components of the data pipeline may be re-factored and the database built up with test data may be wiped and redeployed with new schemas, which may be re-populated in batch form.

Further, such data may then be available for injection into a hosted or local edge VM. A micro-service that has the ability to serve requests for streaming data of notable events may be used for simulated input data for prototyping and/or testing of the synthetic sensors.

Data from data bridge(s) **340** may be provided to data injection layer **333.**

In the example of **Figure 3****,** data injection layer **333** may include a data ingestion conduit **334** which in one example implementation may be a Kinesis conduit. In this case, a conduit **334** is used for a Kinesis^{™} stream for incoming data coming from devices running in Edge. Data is received directly via Kinesis endpoints or is redirected from incoming Message Queuing Telemetry Transport (MQTT) messages (IoT Core **336**) or incoming REST calls for REST API **338.** However, other conduits could equally be used in data injection layer **333,** and the present disclosure is not limited to any particular data injection conduits.

Data from the data injection layer **333** is provided to a data processing pipeline **350.** Specifically, a generic data processing pipeline **350** is provided which may deliver data to a processing function, such as an AWS Lambda^{™} or an Azure Functions or Azure Automation processing function, among others. The use of Lambdas is used for illustration below, but reference to Lambdas could mean any processing function.

Processing pipeline **350** may spawn one or more Lambdas during processing to perform more advanced validation and post-processing of the incoming data and eventually route it to an appropriate location. For example, for data to be routed to S3, this may be done in a manner that separates out data into separate S3 buckets by schema. In addition to S3 delivery, other options include streams such as Kinesis streams, HTTP streaming, among others. A Lambda function is a serverless and event-driven compute service.

Finally, data may need to be routed to other micro-services internally via an internal message broker.

Therefore, data processing pipeline **350** may comprise a network of Lambda functions and the gateway may decide how to route data or to clone to other Lambda functions. However, before large amounts of data with different schemas are streamed into the pipeline, the data pipeline may need to be upgraded sufficiently to route that data accordingly, separating data of different schemas from each other.

The next step in the process, after establishing the base elements in the generic data pipeline, may be to enhance the S3 bucket organization and the delivery of data to S3 such that data of only one schema goes to each bucket. This may make it easier for integrations with data lakes and cloud machine learning (ML) processing that expect the data in an S3 bucket to be consistent in many cases.

For example, data processing pipeline **350** may provide a data relay to an S3 data storage **352** for storage of the data. A naming convention for S3 buckets may need to be defined that is related to schema metadata provided by the schema registration API. In some cases, the schema registration API may therefore be extended to trigger the creation of the corresponding S3 bucket.

In some cases, the process may ensure that the data delivered to the data storage is consistent. For example, if data comes in from loT Core, it may be extracted from the loT message field and then that content is sent to S3, where the data may still contain the MQTT message wrapper. The MQTT message wrapper may be removed before sending the data to S3.

In some cases, the data processing pipeline **350** may be updated to call a new Lambda to route incoming validated data of a particular schema to the corresponding S3 bucket. This may, in some cases, require adding a transformation Lambda to the delivery stream to fix the data before going to S3 or possibly removing the S3 delivery from the delivery stream and adding programmatic logic to forward the data via another custom Lambda function.

Further, in some cases the data may need to be partitioned based on the owner of the data, for example an OEM or third party. Such data may need to be kept separate or directed to a different set of buckets for each OEM, tenant or both. Taking this into account may require administrative tracking of the outputs and nomenclature for the different use cases of outgoing buckets, permissions considerations, among other factors.

Data processing pipeline **350** may also route the data to a streamer **354,** which may be used for various streaming services such as HTTP streaming, among other options.

Data processing pipeline **350** may further provide the data to a data relay 356 which, in some cases maybe the Kinesis of an OEM or other third party.

In some cases, data processing pipeline **350** may provide data to a message broker **360.** For example, message broker **360** may be an Apache Kakfa^{™} message broker, which is an open source, topic-based messaging system used for inter-service communications in cloud deployments, and is similar to AWS Kinesis. However, other message brokers could equally be used. In this regard, a Kafka cluster may be created as a messaging system that micro-services can use to communicate with each other or pass live data around that multiple services can consume. For example, an internal Kafka message broker may be used to cache incoming and generated data and insights for generators and processors to consume and share. Data may be directed to the message broker from data processing Lambdas (data processing pipeline **350**) as data is ingested as well as the output of Insight Data Generators.

Message broker **360** may provide the data to various data processors **362.** For example, data processors **362** may include insight data generators in some cases. As data flows in from outside of system, it needs to be stored and it may be further processed to produce insights / data derived from the incoming data, or normalized and transformed into different forms for later analysis. These insights may also be stored, for example in a database **364,** for future retrieval. The insights may be consumed by other Insight Data Generators running in system.

In some cases, data processors **362** may include vehicle state generators. As data flows in from outside of system, the data may also need to be processed in order to extract certain properties of the vehicle and store a snapshot of certain vehicle properties over a window of time (for example sixty days). This is different from Insight Data Generators, which work on an on-demand processing basis. Vehicle State Generators may be attempting to crystalize the current state of a vehicle at a certain time. The output of these generators may, in some cases, be directed to a different database designed to store rolling data properties for specific vehicles and the data will be added and removed to maintain a limited history of vehicle state. For example, in the embodiment of **Figure 3****,** this is shown with database **366.**

In some cases, data processors **362** may include analytics generators. As data is flowing through the internal data pipeline, there may be a need to analyze this data and store some analytics related to this data from an overview perspective that will be displayed as a graph or reported in a dashboard, whether internally or externally. This analytics data may be stored in a separate database, shown as database **368** in the example of **Figure 3****.** Further, the analytics data may be accessible externally via an Analytics API **380,** as described below. The role of an Analytics Generator is to consume a specific type of data flowing inside system and produce one or more analytics outputs based on that data.

Database **364** may in some cases store registered data schemas and incoming data formatted in pre-registered schemas. Schemas may be stored in a table and, for example, a SchemalD which is a Universally Unique Identifier (UUID) (type 4) may be used to track usage of that schema by incoming and outgoing data. Data may be stored in a separate table. Various identifiers may be stored, including SchemalD, generation timestamp, a tenant ID, OEM ID, VIN number, and/or possibly other identifiers that may be needed to uniquely identify the data source.

Database **366** may be used to store vehicle information as described above.

Database **368** may be used to store analytics information as described above.

Database **370** may be used to store infrastructure information in the example of **Figure 3****.**

Application synchronization may be used to synchronize data and events. For example, the application synchronization may use the AWS AppSync protocol in some cases. However, other protocols could equally be used.

In the example of **Figure 3****,** application synchronization **372** is used to synchronize between database **364** and a data access API **382,** and in particular to implement an externally available query API for external parties. For example, the API may be a GraphQL API for external parties that prefer this query language.

Application synchronization **372** may further used to synchronize between the database **366** and a vehicle state data access API **384.** The vehicle state data access APIs **384** may be used for querying current and past vehicle state. For example, this would allow external 3rd parties to retrieve the odometer readings and other useful data. Thus, the system may expose various APIs for accessing either the entire vehicle state or specific vehicle properties, depending on the filters specified.

In some cases, REST APIs could directly query the vehicle database **366** or data may be retrieved via other APIs such as data access APIs **382.**

In the example of **Figure 3****,** application synchronization **374** is used for synchronization between analytics database **368** and analytics API **380.** In particular, various APIs may be used for querying analytics produced from the system. This may allow external 3rd parties to retrieve analytics generated from analyzing the data coming in from vehicle odometers and other properties deemed important for a specific use case. These analytics could be the source for related sample dashboard components like charts, graphs and reports, among other options.

In some cases, generic rest data APIs **390** could be used to access information in a database **364.**

Further, in some cases, various APIs could be used to access information in a database without using application synchronization. For example, API **388** could access database **370** in the example of **Figure 3****.**

Further, an authorization / permissions module **392** may be used with an infrastructure API **388** for various functionality. This functionality may include defining and implementing the API to request access for a tenant to a particular data schema. This functionality may further include defining and implementing the API to request access for a tenant to a particular attribute common to one or more schemas. This functionality may further include defining and implementing the API to grant / reject requested access by a tenant. This functionality may further include re-factoring existing data access APIs to check the infrastructure database **370** to see what access a tenant has and limit responses to their data access requests accordingly. This functionality may further include only allowing a request for a schema that the tenant has permissions to access. This functionality may further include filtering out any data that a tenant does not have access to when the tenant only has access to some of the data available in the dataset requested.

In some cases, a command line interface **394** may be used to interact with the API **388,** for example for configuration, to create or manage permissions, start, stop, delete or manage VMs (cloud and/or edge VMs), among other functionalities.

However, in other embodiments, rather than or in addition to command line interface **394,** a Web console may be used to manage infrastructure.

The APIs of **Figure** 3 allow for third parties and/or OEMs to manage the lifecycle of VMs in the cloud, specifically the creation, starting, stopping and destroying of VMs. This may use an authorization mechanism in some cases, which may include the introduction of a minimal tenant and user tracking mechanism in the database. In particular, a user who wants to launch a VM may need to upload a Secure Shell (SSH) key that can be added to a VM when it is created, to allow that user to login to it. This could potentially be done on a tenant basis. This means that the APIs above may need a tenant ID and possibly a sessionlD obtained from a separate login API as parameters.

A service **396** may have apps **398** interacting with it, which may be used to obtain data from the data service of **Figure 3****.** For example, service **396** may be an insurance service which allows an insurance company to obtain driving information from a user to implement a pay-as-you-go scheme for insurance. However, other use cases are possible, and the present disclosure is not limited to any service or application used with the data service. Service **396** could use APIs **380, 382, 384,** and/or **390** to interact with the data service.

Using the system of **Figure 3****,** a flexible data pipeline can be defined. The data pipeline can include a network of Lambda functions and a gateway can decide how to write the data to other Lambda functions for processing, streaming, saving or other functionality. Lambda functions may be created as schema are added to the system.

Data may be cloned between the Lambda functions in some cases. For example, this may allow access to some data with very low latency by reducing a path to get the data to its destination, while in parallel looking at a copy for further processing.

The data pipeline is scalable and more Lambda functions or the general data pipeline can be duplicated if traffic needs require.

Further, different versions of the data pipeline can exist for different regions and the functionality of such data pipelines can vary between the different regions.

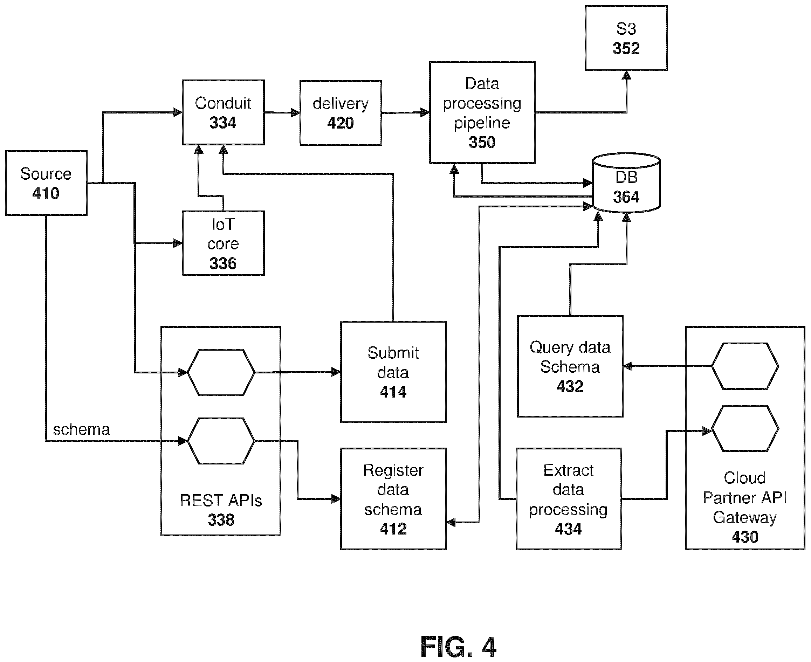

Reference is now made to **Figure 4****,** which shows a simplified system similar to that of **Figure** 3. In particular, in the embodiment of **Figure 4****,** a data source can be a vehicle, virtual machine, or other computing device capable of providing data.

The source could register its data schema at block **412,** for example through REST APIs **338.** Specifically, a REST API **338** gateway endpoint and a Lambda function at block **412** can be called by the data source **410** to register a data schema with the cloud before sending data. The caller may supply the schema, for example in the body of a PUT request from the source **410** to the block **412,** and the response from the block **412** to the source **410** may contain the SchemalD, whether it be a new SchemalD obtained from inserting a new schema record in the database at the block **412** or the SchemalD of the existing database entry for the supplied schema. The block **412** may have a database including the SchemelD and the corresponding registered schema. In some cases, the schema could be a JSON schema, but other schemas are possible. After registering the SchemalD, the source **410** tags the data with the SchemalD.

In the embodiment of **Figure 4****,** data may be provided to a data injection layer similar to that of **Figure** 3. In particular, the data injection layer may comprise a data ingestion conduit **334,** such as a Kinesis conduit. The data injection layer may further include an loT core **336** fallback to the data ingestion conduit **334.** The data injection layer may further include REST APIs **338** as a second fallback. In some cases, the conduit **334** may have knowledge of the data schema and check whether the data complies with the schema. If the data does not comply with the schema, the data may be dropped or moved to a temporary storage for additional processing.

If data is submitted using the REST APIs **338,** a gateway endpoint and a Lambda function that serves as a second fallback mechanism for submitting data to system, shown as block **414,** are provided. The data may in some cases be submitted via a PUT request body, which may be equivalent to what would be sent to Kinesis or via the message attribute of the MQTT message for the loT core **336** submitted as a first fallback.

In the example of **Figure 4****,** data is fed back to the data ingestion conduit **334** from block **414** or from loT core **336.** Such data may then be provided to a delivery mechanism **420,** such as a Kinesis firehose in some embodiments.

The data may then be delivered to a data processing pipeline **350.** The data processing pipeline **350** primarily inspects incoming data packets to ensure the SchemalD is a valid one registered in a database, such as the database at block **412,** or the packet should be dropped or moved to a temporary storage for additional processing. In some cases, the data processing pipeline **350** may also check if the incoming data packets comply with the schema corresponding to the registered SchemalD.

If the SchemalD is valid, the data may be stored in database **364** and then marked as "Processed" so that it will get forwarded to the S3 bucket **352.** In some cases, the data with an invalid SchemalD may be delivered regardless, but filed in a failed subfolder versus a different subfolder for successful data.

Depending on performance requirements, data processing pipeline **350** may need to invoke other processing functions to perform deeper validation of the schema (for example, does the data structure actually comply with the schema) before inserting into the database and other processing that is more labor intensive may be better to be performed outside of the initially invoked processing Lambda. In some cases, since validating schema is labor intensive, the data processing pipeline **350** may sample some data packets to check the schema. The data processing pipeline **350** may query the block **412** for the registered SchemalD and/or schema. The data processing pipeline **350** may also be notified by the block **412** for any new registered SchemalD and/or schema.

Database **364** is a storage or KeySpace^{™} designed to store incoming data formatted in pre-registered schemas. The incoming data may be stored in a table, along various identifiers including SchemalD, generation timestamp, a tenant ID, OEM ID, VIN number, and/or other identifiers that may be needed to uniquely identify the data source.

A cloud partner API Gateway **430** may be used to access data in the system. In particular, such data access may use the REST API Gateway **430** endpoint and a Lambda function, shown at block **432,** that can be called by a third party to query data schemas registered with the cloud. The caller can potentially query by name or SchemalD and the response body may contain the schema (for example a JSON schema). Block **432** may interact with databases **364.**

The cloud partner API Gateway **430** may also be used to extract data. In particular, data extraction may use the REST API Gateway **430** endpoint and a Lambda function, shown at block **434,** that can be used to extract data from the system and in the example of **Figure 4****,** from database **364.** Data can be extracted by SchemalD, timestamp / date range, and/or possibly other identifiers, for example if more restricted data set is required by the caller.

The embodiments of **Figures** 3 and **4** can be used in various situations. For example, in an insurance case, an insurance company may seek permission from a customer to use the customer's data to check on a driver ratings, for example to reduce premiums. Instead of using a dongle with an Onboard Diagnostics (OBD2) port, the system could use synthetic sensors within the vehicle to get the data that the insurance company wants.

The vehicle itself could process the data to create insights and therefore raw data may not need to be passed in some cases, saving over-the-air costs. The processed data may go to the cloud before other processing. However, in some cases raw data may also be sent to the cloud.

The cloud service may be the insurance company's own cloud, or may be a third party company's cloud. If it is a third-party cloud, then the data may be forwarded to another system in some cases, for example using streaming or a Kinesis connection. In this case, the data processing pipeline can cause the data to be stored as raw data or to be routed for further processing or to be routed to a different network.

Depending on the schema, the pipeline could comprise a low latency pipeline.

In other situations, a machine learning model could be located on a vehicle. The vehicle could process the data using the machine learning model. However, to update the model, data may be processed in the cloud for machine learning model retraining. In this case, the pipeline in the cloud could route the data appropriately.

Other options for use cases are possible.

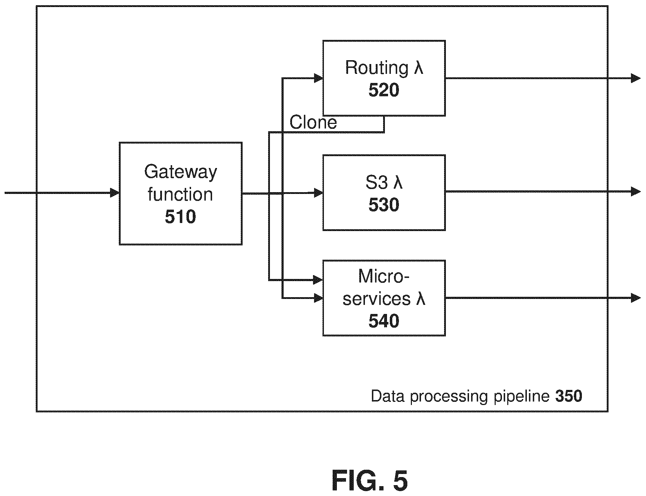

Based on the above, a data processing pipeline can be used to route data, and possibly clone data, in a low latency manner by determining the schema and providing the data to further processing lambdas. Reference is now made to **Figure 5****.**

In the embodiment of **Figure 5****,** a data processing pipeline **350** includes a gateway function **510.** Gateway function **510** is the initial point at which the data processing pipeline receives the data. The gateway function **510** may check that the schema corresponds with a valid schema ID, and based on the schema ID may route the data to its destination or to further processing lambdas.

For example, gateway function **510** may send the data to a routing Lambda **520** which may, in some cases, forward the data to a destination such as an S3 bucket, a streaming service, a connector, among other destinations. In some cases, routing Lambda **520** may clone the received data and provide it to a microservices Lambda **540** for further processing.

Gateway function **510** may further provide the data to an S3 Lambda **530** or directly to the microservices Lambda **540.** The data goes to the S3 Lambda **530** so that the data can be stored in its original format in storages such as **352, 354,** and **356.** The microservices Lambda **540** may process the cloned original data. The processed data can be stored in storages such as **352, 354, 356,** and **364** or sent to the message broker **360** for further processing.

In some cases, the Lambdas may be cascaded, depending on the data schema, and the data may be routed or cloned as required.

Gateway function **510** or any of the processing functions may be duplicated or parallelized to accommodate traffic load and processing requirements. For example, a parallel data pipeline may be created when a volume of data reaches a threshold, thereby allowing the system to scale with increased data loads. Further, in some cases, any secondary processing function (such as microservices Lambda **540)** may be duplicated in the data pipeline when a volume of data reaches a threshold, again allowing the system to scale with increased data loads.

The processing at gateway function **510** allows for high latency functions such as database storage (which can intermittently introduce latency), or S3 storage, which may be a high latency operation, to be separated from low latency operations, thereby creating a faster data pipeline.

Further, in some cases, data with a particular schema identifier can be routed by the gateway function **510** to a bus, which can act as a real time data cache that can be queried.

In some cases, the schema ID can be used to subscribe the data to different topics, with one topic per schema in some cases. Thus, gateway function **510** can route the data based on the schema, and thus the topic, where the gateway function **510** can be triggered to process incoming data as it arrives in the topic of interest. This event driven logic may result in massive parallelization.

Further, using data processing pipeline **350,** any generated data can be fed back into the bus for further downstream processing by components and simultaneous forked into slower data lines for upstream archival, storage and external streaming, similar to how the data was forked from the generic data pipeline earlier in the flow.

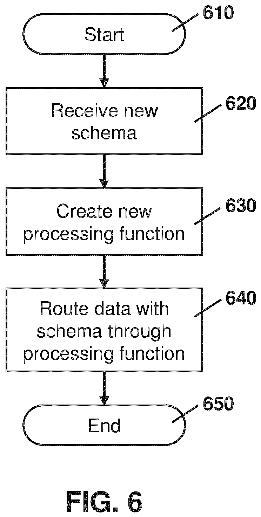

Using such gateway, a process is shown with regards to **Figure 6****.** In particular, the process starts at block **610** and proceeds to block **620** in which the system receives a new schema for data (i.e., the schema is not previously registered).

Based on the schema, the process proceeds to block **630** and may create a new processing function, such as a processing Lambda, for that schema. The processing Lambda may be added to the data processing pipeline and data within the pipeline having the new schema ID may be routed through the new processing function, as shown at block **640,** either directly from the gateway function or through other processing functions. In some cases, the data may be a clone of the original data and the original data may be routed using different processing functionality.

From block **640** the process proceeds to block **650** and ends.

### Hardware

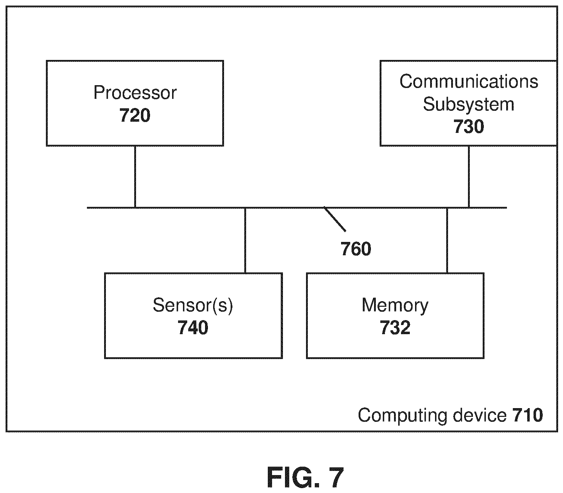

The above nodes, domains, computing devices, platforms, electronic control units, or other computing systems may be implemented using any computing device. One simplified diagram of a computing device is shown with regard to **Figure 7****.** The computing device of **Figure 7** could be any fixed or mobile computing device. While the embodiment of **Figure 7** shows only a single computing device, a plurality of computing devices could be used with the systems and methods herein, and the embodiment of **Figure** 7 is merely provided as an example.

In **Figure 7****,** device **710** includes a processor **720** and a communications subsystem **730,** where the processor **720** and communications subsystem **730** cooperate to perform the methods of the embodiments described above. Communications subsystem **730** allows device **710** to communicate with other devices or network elements and may vary based on the type of communication being performed. Further, communications subsystem **730** may comprise a plurality of communications technologies, including any wired or wireless communications technology.

Processor **720** is configured to execute programmable logic, which may be stored, along with data, on device **710,** and shown in the example of **Figure 7** as memory **732.** Memory **732** can be any tangible, non-transitory computer readable storage medium which stores instruction code that, when executed by processor **720** cause device **710** to perform the methods of the present disclosure. The computer readable storage medium may be a tangible or in transitory/non-transitory medium such as optical (e.g., CD, DVD, etc.), magnetic (e.g., tape), flash drive, hard drive, or other memory known in the art.

Alternatively, or in addition to memory **732,** device **710** may access data or programmable logic from an external storage medium, for example through communications subsystem **730.**

In the example of **Figure 7****,** one or more sensors **740** may be associated with the computing device. However, this is optional and, in some cases, computing device **710** will not be associated with sensors.

Communications between the various elements of device **710** may be through an internal bus **760** in one embodiment. However, other forms of communication are possible.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems, or methods with insubstantial differences from the techniques of this application as described herein.

While operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be employed. Moreover, the separation of various system components in the implementation descried above should not be understood as requiring such separation in all implementations, and it should be understood that the described program components and systems can generally be integrated together in a single software product or packaged into multiple software products.

Also, techniques, systems, subsystems, and methods described and illustrated in the various implementations as discrete or separate may be combined or integrated with other systems, modules, techniques, or methods. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and may be made.

While the above detailed description has shown, described, and pointed out the fundamental novel features of the disclosure as applied to various implementations, it will be understood that various omissions, substitutions, and changes in the form and details of the system illustrated may be made by those skilled in the art. In addition, the order of method steps are not implied by the order they appear in the claims.

When messages are sent to/from an electronic device, such operations may not be immediate or from the server directly. They may be synchronously or asynchronously delivered, from a server or other computing system infrastructure supporting the devices/methods/systems described herein. The foregoing steps may include, in whole or in part, synchronous/asynchronous communications to/from the device/infrastructure. Moreover, communication from the electronic device may be to one or more endpoints on a network. These endpoints may be serviced by a server, a distributed computing system, a stream processor, etc. Content Delivery Networks (CDNs) may also provide may provide communication to an electronic device. For example, rather than a typical server response, the server may also provision or indicate a data for content delivery network (CDN) to await download by the electronic device at a later time, such as a subsequent activity of electronic device. Thus, data may be sent directly from the server, or other infrastructure, such as a distributed infrastructure, or a CDN, as part of or separate from the system.

Typically, storage mediums can include any or some combination of the following: a semiconductor memory device such as a dynamic or static random access memory (a DRAM or SRAM), an erasable and programmable read-only memory (EPROM), an electrically erasable and programmable read-only memory (EEPROM) and flash memory; a magnetic disk such as a fixed, floppy and removable disk; another magnetic medium including tape; an optical medium such as a compact disk (CD) or a digital video disk (DVD); or another type of storage device. Note that the instructions discussed above can be provided on one computer-readable or machine-readable storage medium, or alternatively, can be provided on multiple computer-readable or machine-readable storage media distributed in a large system having possibly a plurality of nodes. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

In the foregoing description, numerous details are set forth to provide an understanding of the subject disclosed herein. However, implementations may be practiced without some of these details. Other implementations may include modifications and variations from the details discussed above. It is intended that the appended claims cover such modifications and variations.

Various aspects of the present invention may be appreciated from the following enumerated example embodiments (EEEs), which are not claims:
EEE1. A method at a data pipeline in computing system, the method comprising:
   receiving data and a schema identifier associated with the data;
   confirming that the schema identifier is valid; and
   routing the data at the data pipeline based on the schema identifier.
EEE2. The method of EEE 1, wherein the routing comprises routing the data to a secondary processing function within the data pipeline.
EEE3. The method of EEE 1, wherein the routing comprises:
   cloning the data to create cloned data;
   sending the data to a destination; and
   sending the cloned data to a processing function,
   wherein the processing function comprises a slower pathway than the sending the data to the destination.
EEE4. The method of any one EEEs 1 to 3, further comprising:
   receiving a new schema identifier; and
   determining a data path for data associated with the new schema identifier.
EEE5. The method of any one of EEEs 1 to 4, further comprising creating a new processing function for data associated with the new schema identifier.
EEE6. The method of any one of EEEs 1 to 5, wherein a parallel data pipeline is created when a volume of data reaches a threshold.
EEE7. The method of EEE 2, wherein the secondary processing function is duplicated in the data pipeline when a volume of data reaches a threshold.
EEE8. The method of any one of EEEs 1 to 7, wherein the confirming the schema identifier is valid comprises checking that schema of the data matches schema of the schema identifier.
EEE9. The method of any one of EEEs 1 to 8, wherein the routing the data comprises routing the data to a bus which comprises a real time data cache.
EEE10. A computing system comprising:
   a processor;
   a data pipeline; and
   a communications subsystem,
   wherein the computing system is configured to:
   receive data and a schema identifier associated with the data;
   confirm, using the processor, that the schema identifier is valid; and
   route the data at the data pipeline based on the schema identifier.
EEE11. The computing system of EEE 10, wherein the computing system is configured to route by routing the data to a secondary processing function within the data pipeline.
EEE12. The computing system of any one of EEEs 10 or 11, wherein the computing system is configured to route by:
   cloning the data to create cloned data;
   sending the data to a destination; and
   sending the cloned data to a processing function,
   wherein the processing function comprises a slower pathway than the sending the data to the destination.
EEE13. The computing system of any one of EEEs 10 to 12, wherein the computing system is further configured to:
   receive a new schema identifier; and
   determine a data path for data associated with the new schema identifier.
EEE14. The computing system of any one of EEEs 10 to 13, wherein the computing system is further configured to create a new processing function for data associated with the new schema identifier.
EEE15. The computing system of any one of EEEs 10 to 14, wherein a parallel data pipeline is created when a volume of data reaches a threshold.
EEE16. The computing system of EEE 11, wherein the secondary processing function is duplicated in the data pipeline when a volume of data reaches a threshold.
EEE17. The computing system of any one of EEEs 10 to 16, wherein the computing system is configured to confirm that the schema identifier is valid by checking that schema of the data matches schema of the schema identifier. EEE18. The computing system of any one of EEEs 10 to 17, wherein the computing system is configured to route the data by routing the data to a bus which comprises a real time data cache.
EEE19. A computer readable medium for storing instruction code, which, when executed by a processor in a computing system cause the computing system to:
   receive data and a schema identifier associated with the data;
   confirm, using the processor, that the schema identifier is valid; and
   route the data at the data pipeline based on the schema identifier.

## Claims

1. A method at a data pipeline in computing system, the method comprising:
receiving data and a schema identifier associated with the data;
confirming that the schema identifier is valid; and
routing the data at the data pipeline based on the schema identifier.

2. The method of claim 1, wherein the routing comprises:
cloning the data to create cloned data;
sending the data to a destination; and
sending the cloned data to a processing function,
wherein the processing function comprises a slower pathway than the sending the data to the destination.

3. The method of any of claims 1 and 2, further comprising:
receiving a new schema identifier; and
determining a data path for data associated with the new schema identifier; and optionally
creating a new processing function for data associated with the new schema identifier.

4. The method of any of claims 1 to 3, wherein a parallel data pipeline is created when a volume of data reaches a threshold.

5. The method of claim 1, wherein the routing comprises routing the data to a secondary processing function within the data pipeline; and optionally
wherein the secondary processing function is duplicated in the data pipeline when a volume of data reaches a threshold.

6. The method of any of claims 1 to 5, wherein the confirming the schema identifier is valid comprises checking that schema of the data matches schema of the schema identifier.

7. The method of any of claims 1 to 6, wherein the routing the data comprises routing the data to a bus which comprises a real time data cache.

8. A computing system comprising:
a processor;
a data pipeline; and
a communications subsystem,
wherein the computing system is configured to:
receive data and a schema identifier associated with the data;
confirm, using the processor, that the schema identifier is valid; and
route the data at the data pipeline based on the schema identifier.

9. The computing system of claim 8, wherein the computing system is configured to route by:
cloning the data to create cloned data;
sending the data to a destination; and
sending the cloned data to a processing function,
wherein the processing function comprises a slower pathway than the sending the data to the destination.

10. The computing system of any of claims 8 and 9, wherein the computing system is further configured to:
receive a new schema identifier; and
determine a data path for data associated with the new schema identifier; and optionally
create a new processing function for data associated with the new schema identifier.

11. The computing system of any of claims 8 to 10, wherein a parallel data pipeline is created when a volume of data reaches a threshold.

12. The computing system of claim 8, wherein the computing system is configured to route by routing the data to a secondary processing function within the data pipeline; and optionally
wherein the secondary processing function is duplicated in the data pipeline when a volume of data reaches a threshold.

13. The computing system of any of claims 8 to 12, wherein the computing system is configured to confirm that the schema identifier is valid by checking that schema of the data matches schema of the schema identifier.

14. The computing system of any of claims 8 to 13, wherein the computing system is configured to route the data by routing the data to a bus which comprises a real time data cache.

15. A computer readable medium for storing instruction code, which, when executed by a processor in a computing system cause the computing system to:
receive data and a schema identifier associated with the data;
confirm, using the processor, that the schema identifier is valid; and
route the data at the data pipeline based on the schema identifier.
